# EUROPEAN PATENT SPECIFICATION

(11) **EP 2 097 310 B1**
(45) Date of publication and mention of the grant of the patent: **29.08.2012**
(21) Application number: 07846448.4
(22) Date of filing: 13.12.2007
(51) Int. Cl.: B62J 6/08, B62J 6/12, B62J 6/06

(54) **BICYCLE TRIP COMPUTER SYSTEM**
FAHRRAD-TRIP-COMPUTERSYSTEM
SYSTÈME D'ORDINATEUR DE BORD DE BICYCLETTE

(30) Priority: 14.12.2006 DK 200601645
(43) Date of publication of application: 09.09.2009
(73) Proprietor: Reelight APS, 8260 Viby J (DK)
(72) Inventor: PEDERSEN, Troels, 2990 Nivå (DK)
(74) Representative: Plougmann & Vingtoft A/S
(86) International application number: PCT/DK2007/050186
(87) International publication number: WO 2008/071199

(56) References cited:
- WO-A-01/33700
- CH-A5- 687 380
- DE-B- 1 044 227
- DE-U1- 9 110 953

## Description

### FIELD OF THE INVENTION

The present invention relates to bicycle trip computer systems and the input signal supply systems related to such trip computer systems.

### BACKGROUND OF THE INVENTION

Generation of an input signal from induction systems mounted on a wheel of the bicycle and the frame of the bicycle are well known. The transmission of the input signal may take place through a wired connection or through a wireless connection.

Similarly, battery-operated trip computers exist for bicycles.

Trip computers rely on being able to register how fast the wheel is rotating, and therefore a small sensor should normally be installed. The sensor may comprise a magnet mounted on the wheel and a coil sensor mounted on the frame where the coil sensor generates speed pulses to the computer. The connection between the coil sensor and the computer may wired or wireless. This sensor provides one or more signals for each wheel revolution so that the trip computer can calculate speed and distances traversed.
CH 687380 discloses a dynamo for supplying electric energy to lights, a trip computer and other electric power consumers.

WO01/33700 according to the preamble of claim 1, discloses that a bicycle computer maybe connected to the first and second electrical output of a generator, and which may provide the bicycle driver with information about, e. g., speed, travel distance, average speed, etc. In particular, the speed may be calculated on the time elapsing between two consecutive passages of a metallic element past a first or second magnet and on the diameter of the wheel. The computer may be either wireless or via a wire connected to the electrical outputs. Whereas WO01/33700 discloses connection of a bicycle computer to a generator, improvements for mounting of electrical systems on a bicycle are still required.

The improvement of the present invention aims towards reducing the need for extra add on systems for such trip computer systems that need to be mounted on the bicycle.

### SUMMARY OF THE INVENTION

The objective of the present invention is in a first aspect achieved through a a bicycle trip computer system comprising:
- a trip computer adapted to output various travel related data to a user,
- an electrical generator being adapted for delivering an AC or DC electrical power and further being adapted for generating an input signal representing the rotation speed of a wheel of the bicycle, the input signal being in a form suitable as input for the trip computer, and
- a light emitter for illumination of the road and/or for bicycle position indication, characterised in that,
the electrical generator comprises transmission equipment for transmitting the electric power and the input signal to the trip computer through same output terminals provided for wired connection of the input signal to the trip computer, that the light emitter and the trip computer are integrated in the same housing, and that the light emitter and trip computer are powered by the electric power, and the trip computer is provided with the input signal for calculation of speed, the electric power and the input signal being transmitted by said same output terminals.

By tapping an input signal from the generator that is provided for generating electrical power for illumination purposes the need for an extra induction system is eliminated, hereby simplifying the installation of the trip computer system.

Preferably the trip computer is adapted for visual display of travel related data on a screen. Alternatively the trip computer is adapted for audio transmission of travel related data through a speaker system, e.g. a telephone headset.

In a preferred embodiment energy storage is provided for supplying electrical power to the trip computer during standstill of the generator.

The bicycle trip computer system may comprise a light emitter for illumination of a display.

In summary, the invention relates to an electric generator for a bicycle which is used both for powering bicycle applications and for providing a speed signal to a bicycle computer. Since the speed signal is the same as the power signal, only one wired connection between the generator and the bicycle trip computer is needed. The invention also relates to a bicycle trip computer system. The bicycle trip computer system may both include the trip computer and a bicycle front light, where both the computer and light is powered by the generator and where the computer also utilises the power signal for deriving and displaying e.g. the speed of the bicycle.

### BRIEF DESCRIPTION OF THE FIGURES

Preferred embodiments are illustrated in the attached drawing where a preferred embodiment of the invention is illustrated as an example only, and where;
FIG. 1 shows schematically a bicycle mounted with equipment according to the invention,
FIG. 2 shows schematically a bicycle lamp with a trip computer integrated with the lamp
FIG. 3 shows an example of a generator capable of providing a signal for the trip computer.

### DESCRIPTION OF EMBODIMENTS

This invention relates to the construction of a trip computer for use on bicycles. The trip computer receives its signal and energy from a generator that is used for driving a light source on the bicycle.

It is well known to make lamps that are provided with current by a dynamo.

Having thus both dynamo/lamp and trip computer on the bicycle, a wire is needed to lead current from the dynamo to the lamp, which e.g. is mounted on the handlebars of the bicycle. A wire is also needed from a speed sensor at the wheel to the trip computer, which most often is battery-operated.

The invention solves the problem of having, in principle, two different products which in many respects contain the same functional units, by letting the trip computer use the current of the generator to operate/power it and by also receiving the signal for the calculation of speed and distance traversed directly from the generator.

Accordingly, an embodiment of the invention relates to an electrical generator for a bicycle, the generator being adapted for delivering an AC or DC electrical power and further being adapted for generating an input signal representing the rotation speed of a wheel of the bicycle, the input signal being in a form suitable as input for a bicycle trip computer, and the electrical generator comprises transmission equipment for transmitting the electric power and the input signal to a trip computer through same output terminals provided for wired connection of the input signal to the trip computer.

In an embodiment of the generator for a bicycle, a transmitter is provided for wireless transmission of input signal to the trip computer.

In an embodiment of the transmitter for wireless transmission, the wireless transmission of the input signal is performed by means of an optical transmission, an infrared transmission, an electromagnetic transmission or an RF transmission.

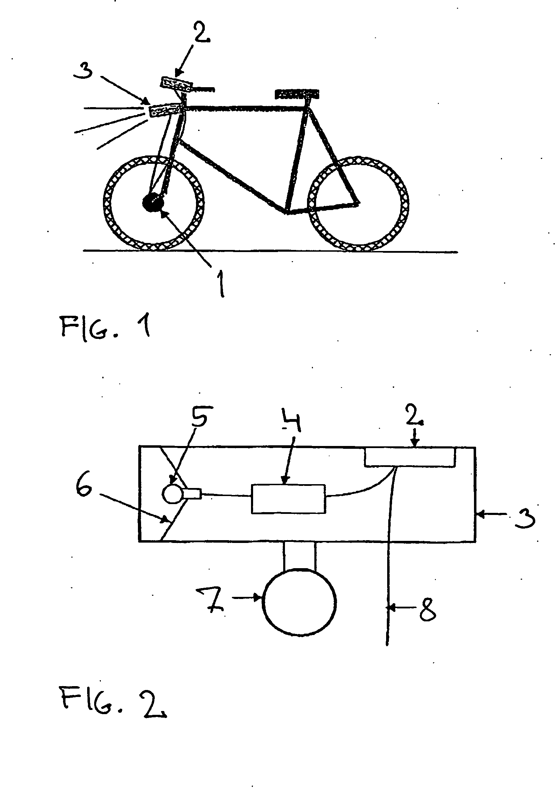

FIG. 1 illustrates an embodiment in which the trip computer 2 is mounted on the handlebars 7 and is connected to the generator 1 via a wire 8. In this way, the trip computer is provided with its energy to operate/power its electronic components from the generator when the bicycle is moved. If the trip computer contains a small storage 4, in the form of a Gold Cap capacitor or a chargeable battery, this could provide the trip computer with current at standstill when the bicycle is not being ridden. The signal from the generator may e.g. be an ac signal which is directly proportional with the speed of the bicycle (e.g. 50 impulses/wheel revolution) and with the correct setting of the trip computer, this may compensate for the difference in the number of impulses that the generator provides, regardless of the type of generator it is coupled to.

As the generator must also provide current to a lamp, a headlamp is also illustrated in Fig. 1, said headlamp 3 being usable for lighting up the road or for being seen.

FIG. 2 illustrates an embodiment in which the lamp 3 with bulb and reflector 5,6 and the trip computer 2 are integrated in the same housing, which, for example, is mounted on the handlebars of a bicycle. By integrating the two units, significant savings are obtained because the house, the battery and not least the sensor for the trip computer are eliminated. It may be contemplated also to use the control panel in the trip computer for controlling when to turn the lamp on and off, and for the electronic components of the trip computer also to control the administration of how the lamp should shine. If, for example, the lamp contains a small storage which can provide the lamp with light at standstill (at traffic lights), the internal logic of the trip computer may also control charging and discharging of this. The trip computer may also, for example, help the user with light intensity and other things depending on operating conditions.

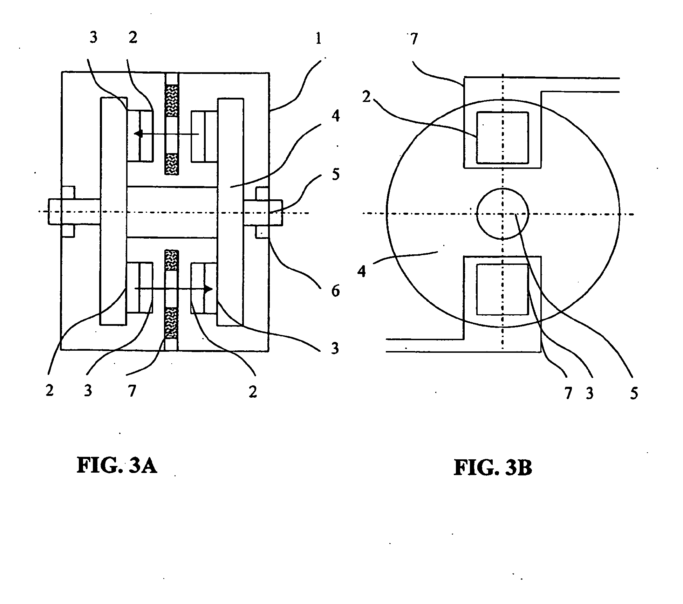

FIG. 3 illustrates an embodiment of a generator in which two parallel magnetic conductive pulleys or anchors are used to rotate the magnets. These pulleys can also be made of a non-conductive material, but then the effect will be smaller. On each pulley two magnets are mounted pole reversed as illustrated, so that the field moves in one direction for two opposite magnets and in the other direction for the other two magnets.

In between magnets is air, or coil core material, which is not magnetically conductive. Surrounding this core material a coil is wound, as indicated in FIG. 1, with windings shown to surround the two sets of magnets.

When the magnets are rotated by rotation of the pulleys, the magnetic field direction through the coil will shift for passage of each set of magnets. This induces current into the coil, which may be withdrawn for the purpose of driving a LED or a light bulb 5.

The two pulleys may be formed as one piece, or in several pieces having being joined.

A trip computer for use on bicycles has been invented, said trip counter using signals and current from a generator on the bicycle, the generator also being used for operating a light source.

The trip computer may be characterized in the signal used by the trip counter being the same signal - e.g. an ac voltage - as that provided by the generator to the light source. The trip computer may be characterized in the signal of the trip counter being a separate signal, provided by the generator, via its own wire/cable. The trip computer may be characterized in the signal to the trip counter being superposed in an ac or dc voltage providing current to the light source. The trip computer amy be characterized in the signal between the generator and the trip counter being electrical. The trip computer may be characterized in the signal between the generator and the trip counter being optical. The trip computer may be characterized in the signal from the trip counter being infrared or an electromagnetic signal. The trip computer may be characterized in the trip counter being provided with electricity via the current provided to the lamp by the generator; however, the trip counter receiving the signal relating to speed etc. as electrical light or an electromagnetic signal. The trip computer may be characterized in the trip counter having a small storage, which is charged when the bicycle is running, and which provides the memory of the trip counter with current at standstill. The trip computer may be characterized in the trip counter receiving light from the light source or from its own integrated light source during operation and standstill.

## Claims

1. A bicycle trip computer system comprising:
- a trip computer (2) adapted to output various travel related data to a user,
- an electrical generator (1) being adapted for delivering an AC or DC electrical power and further being adapted for generating an input signal representing the rotation speed of a wheel of the bicycle, the input signal being in a form suitable as input for the trip computer, and
- a light emitter (5) for illumination of the road and/or for bicycle position indication, **characterised in that**,
the electrical generator (1) comprises transmission equipment (8) for transmitting the electric power and the input signal to the trip computer through same output terminals provided for wired connection of the input signal to the trip computer, that the light emitter and the trip computer are integrated in the same housing, and that the light emitter and trip computer are powered by the electric power, and the trip computer is provided with the input signal for calculation of speed, the electric power and the input signal being transmitted by said same output terminals.

2. A bicycle trip computer system according to claim 1, where the trip computer (2) is adapted for visual display of travel related data on a screen.

3. A bicycle trip computer system according to claim 1, where the trip computer (2) is adapted for audio transmission of travel related data through a speaker system, e.g. a telephone headset.

4. A bicycle trip computer system according to claim 1, 2 or 3 where an energy storage (4) is provided for supplying electrical power to the trip computer during standstill of the generator (1).

5. A bicycle trip computer system according to claims 1-4, comprising a light emitter for illumination of a display.

## Patentansprüche

1. Fahrrad-Streckencomputersystem umfassend:
- einen Streckencomputer (2), der dazu beschaffen ist, dem Benutzer verschiedene fahrtbezogene Daten auszugeben,
- einen elektrischen Generator (1), der dazu beschaffen ist, einen elektrischen Wechselstrom oder Gleichstrom abzugeben, und der weiterhin dazu beschaffen ist, ein Eingangssignal zu erzeugen, das die Drehzahl eines Rads des Fahrrads repräsentiert, wobei das Eingangssignal eine Form aufweist, die als Eingabe für den Streckencomputer geeignet ist, und
- einen Lichtstrahler (5) zur Beleuchtung der Straße und/oder als Fahrradpositionsanzeige, **dadurch gekennzeichnet, dass**
der elektrische Generator (1) Übertragungsausrüstung (8) zur Übertragung des elektrischen Stroms und des Eingangssignals an den Streckencomputer durch dieselben Ausgangsklemmen umfasst, die für eine Drahtverbindung des Eingangssignals mit dem Streckencomputer vorgesehen sind, dass der Lichtstrahler und der Streckencomputer im selben Gehäuse eingebaut sind und dass der Strahler und der Streckencomputer durch den elektrischen Strom betrieben werden, und dass der Streckencomputer das Eingangssignal zur Berechnung der Geschwindigkeit erhält, wobei der elektrische Strom und das Eingangssignal von denselben Ausgangsklemmen übertragen werden.

2. Fahrrad-Streckencomputersystem nach Anspruch 1, wobei der Streckencomputer (2) zur visuellen Anzeige der fahrtbezogenen Daten auf einem Bildschirm beschaffen ist.

3. Fahrrad-Streckencomputersystem nach Anspruch 1, wobei der Streckencomputer (2) zur Tonübertragung der fahrtbezogenen Daten durch ein Lautsprechersystem, z. B. ein Telefon-Headset, beschaffen ist.

4. Fahrrad-Streckencomputersystem nach Anspruch 1, 2 oder 3, wobei ein Energiespeicher (4) zur Versorgung des Streckencomputers mit elektrischem Strom während des Stillstands des Generalstors (1) vorgesehen ist.

5. Fahrrad-Streckencomputersystem nach einem der Ansprüche 1-4, umfassend einen Strahler zur Beleuchtung einer Anzeige.

## Revendications

1. Système d'ordinateur de bord de bicyclette comprenant :
- un ordinateur de bord (2) adapté pour fournir à un utilisateur diverses données relatives à un déplacement,
- un générateur (1) électrique adapté pour produire un courant électrique alternatif ou continu et également adapté pour générer un signal d'entrée représentant la vitesse de rotation d'une roue de la bicyclette, le signal d'entrée étant sous une forme pouvant être entrée dans l'ordinateur de bord, et
- une source de lumière (5) pour éclairer la route et/ou signaler la position de la bicyclette, **caractérisé en ce que**
le générateur électrique (1) comprend un équipement de transmission (8) pour transmettre à l'ordinateur de bord le courant électrique et le signal d'entrée au travers des mêmes bornes de sortie que celles assurant la connexion filaire du signal d'entrée à l'ordinateur de bord, **en ce que** la source de lumière et l'ordinateur de bord sont intégrés dans le même boîtier, et **en ce que** la source de lumière et l'ordinateur de bord sont alimentés par le courant électrique, et l'ordinateur de bord reçoit le signal d'entrée pour calculer la vitesse, le courant électrique et le signal d'entrée étant transmis par lesdites mêmes bornes de sortie.

2. Système d'ordinateur de bord de bicyclette selon la revendication 1, dans lequel l'ordinateur de bord (2) est adapté pour afficher visuellement sur un écran les données relatives à un déplacement.

3. Système d'ordinateur de bord de bicyclette selon la revendication 1, dans lequel l'ordinateur de bord (2) est adapté pour assurer la transmission audio des données relatives à un déplacement par un système de haut-parleur, par exemple un casque téléphonique.

4. Système d'ordinateur de bord de bicyclette selon la revendication 1, 2 ou 3, dans lequel un système de stockage d'énergie (4) alimente l'ordinateur de bord en courant électrique pendant les arrêts du générateur (1).

5. Système d'ordinateur de bord de bicyclette selon les revendications 1 à 4, comprenant une source de lumière pour éclairer un écran.
